# EUROPÄISCHE PATENTSCHRIFT

(11) **EP 2 250 870 B1**
(45) Veröffentlichungstag und Bekanntmachung des Hinweises auf die Patenterteilung: **14.03.2012**
(21) Anmeldenummer: 10159791.2
(22) Anmeldetag: 13.04.2010
(51) Int. Cl.: A01D 41/12, A01F 12/40

(54) **Erntegutrestehäcksel und -verteilanordnung für einen Mähdrescher**
Harvested goods remnant shredder and distribution assembly for a combine harvester
Agencement de hachage et de répartition de résidus de produits de récolte pour une moissonneuse-batteuse

(30) Priorität: 14.05.2009 DE 102009003124
(43) Veröffentlichungstag der Anmeldung: 17.11.2010
(73) Patentinhaber: DEERE & COMPANY, Moline, Illinois 61265-8098 (US)
(72) Erfinder: Pohlmann, Norbert, 66482 Zweibrücken (DE); Lauer, Fritz, 66894 Krähenberg (DE); Weichholdt, Dirk, 57200 Woelfling-lès-Sarreguemines (FR); Priesnitz, Rico, 66822 Lebach (DE); Klein, Oliver, 66822 Lebach (DE)
(74) Vertreter: Holst, Sönke

(56) Entgegenhaltungen:
- EP-A1- 0 631 717
- EP-A1- 1 269 822
- EP-A1- 1 532 858
- EP-A2- 1 514 466
- DE-A1-102008 040 129
- US-A1- 2007 015 556

## Beschreibung

Die Erfindung betrifft eine Erntegutrestehäcksel- und -verteilanordnung für einen Mähdrescher.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt.

Die DE 199 08 111 C1 beschreibt einen Mähdrescher mit einem Strohhäcksler und zwei seitlich nebeneinander angeordneten, dem Strohhäcksler folgenden Wurfgebläsen zum breit verteilten Austragen des Strohs über das Feld. Der Auslass des Strohhäckslers und der Einlass der in einem Gehäuse angeordneten Wurfgebläse, die um eine etwa senkrechte Achse rotierende Wurfpaddel umfassen, sind zu Zwecken einer richtungsänderungslosen Gutübergabe in einer Ebene angeordnet. Um die Wurfgebläse herum sind Ummantelungen angebracht, die sich zwischen den Wurfgebläsen in einer vorderen, dem Strohhäcksler zugewandten Spitze vereinigen. Im rückwärtigen Bereich sind die Ummantelungen ausgebrochen, um das Stroh auf das Feld abzugeben. Die mit ihren Vorderseiten nach innen drehenden Wurfgebläse ragen seitlich über den Strohhäcksler hinaus, wobei sich ihre Drehachsen jeweils in der Nähe eines äußeren Endes des Strohhäckslers befinden. Ähnliche Anordnungen finden sich auch in der EP 1 269 822 A1, EP 1 277 387 A1, EP 1 514 466 A2 und EP 1 532 858 A1.

Dieser Stand der Technik weist verschiedene Nachteile auf. Die Wurfgebläse der DE 199 08 111 C1 sind relativ groß und ragen seitlich über den Strohhäcksler hinaus, was zwar den Vorteil hat, dass die Wurfgebläse mit ihren äußeren, sich nach vorn drehenden Bereichen relativ wenig Erntegutreste erhalten und zunächst nach vorn fördern müssen, was den Energiebedarf der Wurfgebläse relativ gering hält. Andererseits sind die großen Wurfgebläse relativ sperrig und aufwändig. Die Wurfgebläse der EP 1 269 822 A1, EP 1 277 387 A1, EP 1 514 466 A2 und EP 1 532 858 A1 sind etwas geringeren Durchmessers, was aber den erwähnten Nachteil hat, dass die äußeren Bereiche der Wurfgebläse die dort auftreffenden Erntegutreste um näherungsweise 180° umlenken müssen, was recht energieaufwändig ist. Die EP 2 036 422 A2 beschreibt einen Mähdrescher mit einem Strohhäcksler und dahinter angeordneten Strohleitblechen, bei dem der Erntegutrestestrom stromab des Strohhäckslers in seitlicher Richtung eingeschnürt wird, damit die Wurfweite des Strohs unabhängiger von der Verteilung der Erntegutreste entlang der Welle des Strohhäckslers wird.

In der US 2007/0015556 A1 wird ein Mähdrescher mit einem Strohhäcksler beschrieben, bei dem der Auslass des Strohhäckslers die nachfolgenden Wurfgebläse von unten her an ihrem Umfang unter einem spitzen Winkel beaufschlagt. Die WO 2008/156419 A1 beschreibt eine ähnliche Anordnung des Strohhäckslers und Wurfgebläses, jedoch wird der Erntegutstrom stromab des Strohhäckslers durch ein Blech abgelenkt, so dass er in axialer Richtung, jedoch unter einem relativ spitzen Winkel auf das Wurfgebläse trifft. Dabei wird der mittlere Teil des Erntegutresteflusses weniger stark abgelenkt als der äußere Teil, um zu erreichen, dass die nach dem Verlassen des Strohhäckslers bereits vorhandene Geschwindigkeit der zu verteilenden Erntegutreste in einem möglichst hohen Maße ausgenutzt wird, indem die mit ihren Vorderseiten nach innen drehenden Wurfgebläse vor der Drehachse mit dem äußeren Teil des Erntegutresteflusses beaufschlagt werden, während der mittlere Teil des Erntegutresteflusses im Bereich rückwärtig der Drehachse gegen die Wurfgebläse geworfen wird. Hierbei ist als nachteilig anzusehen, dass die Umlenkung des Erntegutresteflusses stromab des Strohhäckslers zu Reibung und somit zu Energieverlusten führt, sogar in den inneren Bereichen, in denen eine relativ kleine Ablenkung des Erntegutresteflusses erfolgt.

### Aufgabe der Erfindung

Die der Erfindung zu Grunde liegende Aufgabe wird darin gesehen, eine Erntegutrestehäcksel- und -verteilanordnung mit einem Strohhäcksler und zwei stromab des Strohhäckslers angeordneten Wurfgebläsen für einen Mähdrescher bereitzustellen, die zumindest einen der oben erwähnten Nachteile nicht oder nur in vermindertem Maße aufweist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Emtegutrestehäcksel- und -verteilanordnung für einen Mähdrescher umfasst einen Strohhäcksler und zwei bezüglich der Gutflussrichtung stromab des Strohhäckslers angeordnete Wurfgebläse. Im Erntebetrieb zerkleinert der Strohhäcksler ihm zugeführte Emtegutreste, insbesondere Stroh. Er kann mit seinen Messern und ggf. zusätzlichen Förderpaddeln auch andere Erntegutreste fördern, beispielsweise Kaff, sei es gemeinsam mit dem Stroh im Häckselbetrieb oder wahlweise in einer Strohschwadablagebetriebsart, in dem das Stroh am Strohhäcksler vorbeigeführt wird, nur diese Erntegutreste. Die vom Strohhäcksler heran geförderten Erntegutreste werden durch die zwei Wurfgebläse angenommen und über das Feld verteilt. Dazu rotieren die Wurfgebläse gegensinnig, wobei die dem Strohhäcksler zugewandten Bereiche der Wurfgebläse aufeinander zu drehen. Das in Vorwärtsrichtung linke Wurfgebläse rotiert, wenn man es von oben betrachtet, demnach im Uhrzeigersinn, während das in Vorwärtsrichtung rechte Wurfgebläse, von oben her betrachtet, im Gegenuhrzeigersinn rotiert. Zwischen den Wurfgebläsen ist ein Leitelement angebracht, das den Erntegutrestestrom im Bereich zwischen den Wurfgebläsen führt. Zwischen dem Leitelement und dem Leitelement benachbarten, die Wurfgebläse teilweise umrandenden Teilummantelungen bleiben in seitlicher Richtung jeweils Durchlässe frei, durch die ein im mittleren Bereich des Strohhäckslers abgegebener Erntegutrestestrom vom Strohhäcksler nach hinten hindurch bis auf das Feld strömen kann, ggf. nachdem er von einem beweglichen Führungselement in seitlicher Richtung abgelenkt wurde.

Das Leitelement umfasst eine dem Strohhäcksler unmittelbar benachbarte, vordere Spitze, die sich vorzugsweise unmittelbar an den Hüllkreis der Häckselmesser anschließt und deren Form demnach an den Hüllkreis der Häckselmesser angepasst ist. Da sich die Spitze des Leitelements in sehr geringem Abstand an den Hüllkreis der Häckselmesser anschmiegt, vorzugsweise mit einem derart kleinen Spalt, dass die Häckselmesser Erntegutreste von der Spitze entfernen, werden unerwünschte Erntegutansammlungen an der Spitze vermieden. Es wäre denkbar, dass das Leitelement den Erntegutrestestrom in zwei Hälften aufteilt und diese jeweils einem der Wurfgebläse zuführt, wie in der DE 199 08 111 C1 beschrieben.

Das Leitelement kann sich bis hinter die Drehachsen der Wurfgebläse erstrecken und an sein rückwärtiges Ende kann sich das erwähnte bewegliche Führungselement anschließen, das im Betrieb durch einen geeigneten Antrieb kontinuierlich um eine sich parallel zur Drehachse der Wurfgebläse erstreckende Achse bewegt wird.

Bei einer bevorzugten Ausführungsform der Erfindung sind der Strohhäcksler innerhalb eines Strohhäckslergehäuses und die Wurfgebläse innerhalb eines Wurfgebläsegehäuses angeordnet. Da sich die Spitze in das Strohhäckslergehäuse hinein erstreckt, während das eigentliche Leitelement sich im Wurfgebläsegehäuse befindet, bietet es sich an, das Leitelement aus zwei Teilen zusammenzusetzen. Ein vorderer, die Spitze umfassender Teil des Leitelements ist an einem Erntegutresteführungselement befestigt, das Teil des Strohhäckslergehäuses oder damit verbunden ist. Ein rückwärtiger Teil des Leitelements ist hingegen am Wurfgebläsegehäuse befestigt. Zum unproblematischen Zusammenfügen beider Teile ist vorgeschlagen, an der Rückseite des vorderen Teils einen Schlitz vorzusehen, in den hinein sich der rückwärtige Teil erstreckt. Dadurch vermeidet man außerdem die Entstehung überstehender Kanten, an denen sich Erntegutreste ansammeln können.

Weiterhin wird vorgeschlagen, dass die Wurfgebläse innerhalb von Teilummantelungen angeordnet sind, in denen dem Leitelement benachbarte Lücken vorgesehen sind, damit ein Teil des von den Wurfgebläsen abgegebenen Erntegutrestestroms durch das Leitelement nach hinten geleitet und in der Nähe der Mitte des Mähdreschers auf dem Feld abgegeben werden kann.

Weiterhin wird vorgeschlagen, dass zwischen dem Strohhäcksler und den Wurfgebläsen, deren Drehachsen innerhalb der Breite des Strohhäckslers angeordnet sind, äußere Leitelemente vorgesehen sind, um die bezüglich der seitlichen Richtung äußeren Bereiche des Erntegutresteflusses nach innen hin abzulenken. Die Wurfgebläse werden demnach in ihren äußeren Bereichen, die sich entgegen der Vorwärtsrichtung nach vorn drehen, in geringerem Maße mit Erntegutresten beaufschlagt, was sich positiv auf den Energiebedarf der Wurfgebläse auswirkt. Diese Maßnahme ist besonders sinnvoll, wenn sich die gesamten Wurfgebläse innerhalb der Breite des Strohhäckslers befinden, obwohl durchaus Randbereiche der Wurfgebläse seitlich über die Breite des Strohhäckslers hinaus ragen können.

Die Leitelemente werden insbesondere an einer seitlichen Wand des Strohhäckslergehäuses oder einer damit verbundenen Seitenwandverlängerung angebracht.

Hinsichtlich der relativen Anordnung von Strohhäcksler und Wurfgebläse zueinander bestehen im Rahmen des erfindungsgemäßen Gedankens unterschiedliche Möglichkeiten. So kann der Strohhäcksler das Wurfgebläse in exakt radialer Richtung beaufschlagen (vgl. DE 199 08 111 C1) oder den radial äußeren Rand des Wurfgebläses unter einem spitzen oder stumpfen Winkel (s. US 2007/0015556 A1) oder die Erntegutreste werden dem Wurfgebläse in axialer Richtung unter einem spitzen oder stumpfen Winkel, mit (s. WO 2008/156419 A1) oder ohne (s. DE 10 2007 037 485 B3) Umlenkung der Erntegutreste stromab des Strohhäckslers durch ein Ablenkelement zugeführt.

Bei axialer Beaufschlagung der Wurfgebläse ist es denkbar, dass der Erntegutrestestrom den Wurfgebläsen in einem mittleren Bereich unter einem größeren Winkel gegenüber der Drehachse zugeführt wird als in äußeren Bereichen. Mit anderen Worten trifft der Erntegutrestestrom im mittleren Bereich in einem relativ flachen Winkel zum Radius des Wurfgebläses auf dessen Paddel. Dadurch wird im mittleren Bereich die durch den Strohhäcksler bereits bereitgestellte Geschwindigkeit der Erntegutreste besser ausgenutzt und eine größere Wurfweite erzielt, während der Erntegutrestestrom in den äußeren Bereichen unter kleineren Winkeln gegenüber der Drehachse auf die Wurfgebläse trifft (d. h. der Erntegutrestestrom trifft unter einem steileren Winkel als im mittleren Bereich gegenüber dem Radius des Wurfgebläses auf dessen Paddel), sodass sie eine geringere Umlenkung als um 180° durchführen müssen, was ebenfalls die Energiebilanz der Wurfgebläse verbessert.

Die erwähnten Winkel können durch Umlenkbleche bereitgestellt werden, wie sie in der WO 2008/156419 A1 beschrieben sind und unter den eingangs genannten Nachteilen leiden. Daher wird vorgeschlagen, dass zwischen dem konkav gekrümmten Boden des Strohhäckslergehäuses und den Wurfgebläsen ein in sich flaches Erntegutresteführungselement angeordnet ist. Die Auswurfrichtung des Strohhäckslers wird demnach nur durch den Boden vorgegeben, während das Erntegutresteführungselement nur zum Leiten des Emtegutrestestroms zu den Wurfgebläsen dient, aber keine mit nachteiliger Reibung behaftete Umlenkfunktion ausübt.

Insbesondere läuft der Erntegutrestestrom in Vorwärtsrichtung vor den Drehachsen der Wurfgebläse ein, wobei keine unterschiedliche Ablenkung in einem äußeren bzw. inneren Bereich erfolgt.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einem Strohhäcksler und Wurfgebläsen,
- Fig. 2: eine vergrößerte seitliche Ansicht des Strohhäckslers und eines Wurfgebläses,
- Fig. 3: eine Draufsicht auf den Strohhäcksler und die Wurfgebläse,
- Fig. 4: eine perspektivische Ansicht eines Emtegutresteführungselements,
- Fig. 5: eine perspektivische Ansicht der Wurfgebläse von hinten und unten mit abgenommenen Drehtellern und Wurfpaddeln, wobei beim rechten Wurfgebläse eine längere Abschirmung und bei linken Wurfgebläse eine kürzere Abschirmung in einer aktiven Stellung ist,
- Fig. 6: die Ansicht aus Fig. 5, wobei beim linken Wurfgebläse die kürzere Abschirmung in eine weiter zurückgezogene Stellung verbracht ist,
- Fig. 7: die Ansicht aus Figur 6 mit montierten Drehtellern und Wurfpaddeln, und
- Fig. 8: eine Draufsicht auf die Wurfgebläse analog Figur 3, jedoch mit einer anderen Ausführungsform eines Führungselements.

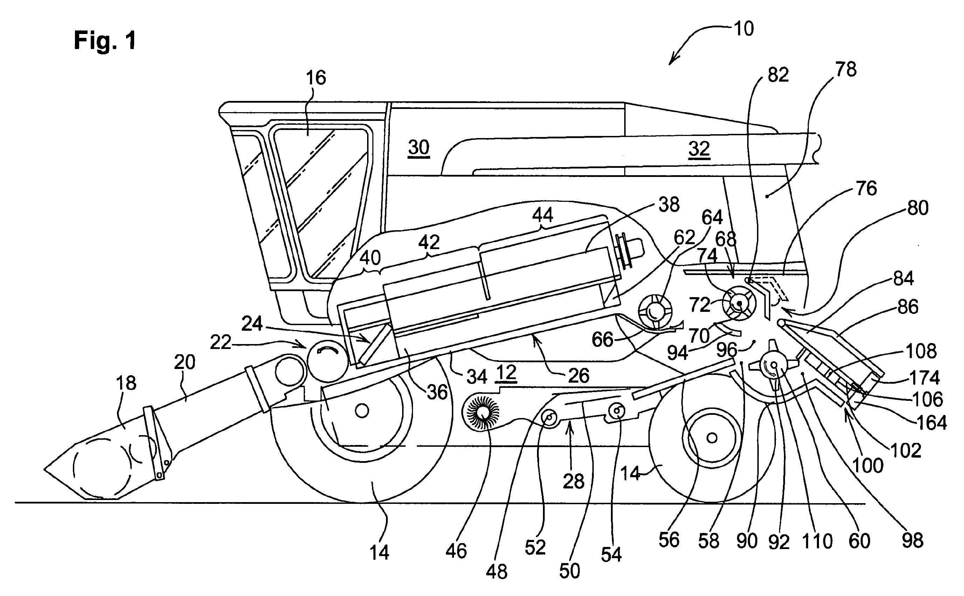

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vom und hinten, auf die Vorwärtsrichtung des

Mähdreschers 10, die in der Figur 1 nach links verläuft.

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinrichtung 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Emtegutbearbeitungseinheit 26 befindet sich der zylindrische Trennabschnitt 44 der Trommel 38. Anstelle einer axialen Erntegutbearbeitungseinheit 26 können auch eine tangentiale Dreschtrommel und eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Komwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich ein weiterer Förderer in Form eines oberschlächtig arbeitenden Trommelförderers 68. Der Trommelförderer 68 erstreckt sich horizontal und quer zur Vorwärtsrichtung und ist durch einen geeigneten Antrieb um seine Achse 70, an der er drehbar am Fahrgestell 12 befestigt ist, in eine Drehrichtung in Drehung versetzbar, in der er oberschlächtig arbeitet und in der Figur 1 im Uhrzeigersinn dreht, wie durch den Pfeil angedeutet. Zum Antrieb des Trommelförderers 68 wird in der Regel ein Hydraulikmotor verwendet. Der Trommelförderer 68 entspricht in seinem Aufbau der Auswurftrommel 64 und umfasst einen rotationssymmetrischen Mantel 72 mit um seinen Umfang verteilten, starr daran angebrachten Mitnehmern 74. Unterhalb des Trommelförderers 68 ist eine Wanne 94 angeordnet.

Oberhalb der Auswurftrommel 64 und des Trommelförderers 68 ist eine sich horizontal und in Vorwärtsrichtung erstreckende obere Wand 76 angebracht, die einen darüber befindlichen Motorraum 78 nach unten abschließt. An der Wand 76 ist eine Klappe 80 an ihrem vorderen, dem Trommelförderer 68 benachbarten Ende um eine sich horizontal und quer zur Vorwärtsrichtung erstreckende Achse 82 zwischen einer Schwadablageposition und einer Häckselposition verschwenkbar angelenkt. Die Klappe 80 ist in sich konkav gekrümmt, wobei der Radius an den Trommelförderer 68 angepasst ist.

Unterhalb des unteren und rückwärtigen Endes der Klappe 80 schließt sich (bei in der Häckselstellung befindlicher Klappe 80) lückenlos ein mit dem Fahrgestell 12 fest verbundenes Blech 84 an, das sich schräg nach hinten und unten erstreckt und mit einer sich daran anschließenden Rutsche 86 verbunden ist, auf der das Stroh im Schwadablagebetrieb nach unten auf den Feldboden gleiten kann. Das Strohschwad kann noch durch an der Oberseite der Rutsche 86 angebrachte Leitkufen oder Strohleitrechen (nicht gezeigt) in eine gewünschte Form gebracht werden.

Die Klappe 80 ist um die Achse 82 zwischen der Häckselposition, in der sie in der Figur 1 mit durchgezogenen Linien dargestellt ist, und einer Schwadablageposition verschwenkbar, in der die Klappe 80 in der Figur mit gestrichelten Linien dargestellt ist und sie sich oberhalb des Strohflusses nach hinten erstreckt.

Unterhalb des Blechs 84 befindet sich der Strohhäcksler 60, der sich aus einem Strohhäckslergehäuse 90 und einem darin angeordneten, um eine quer zur Vorwärtsrichtung und horizontal verlaufende Achse drehbaren Rotor 92 mit um den Umfang des Rotors 92 verteilten, pendelnd aufgehängten Häckselmessern 96 zusammensetzt. Am Rotor 92 können auch zusätzliche Wurfpaddelpaddel (nicht gezeigt) befestigt werden, oder einige oder alle Häckselmesser 96 umfassen Paddel zur Luftförderung. Stromab eines Auslasses 98 des Strohhäckslers 60 ist sind zwei seitlich nebeneinander unterhalb der Rutsche 86 angeordnete Wurfgebläse 100 vorgesehen, von denen in der Figur 1 nur ein einziges erkennbar ist. Die Wurfgebläse 100 umfassen eine Anzahl an Wurfpaddeln 102, die jeweils durch jeweils einen Hydraulikmotor 106 um ihre (sich etwa vertikal erstreckenden, jedoch leicht nach hinten und oben geneigten) Drehachsen 108 in Drehung versetzbar sind, und denen der Strohhäcksler 60 die Erntegutreste in axialer Richtung unter einem stumpfen Winkel gegenüber den Drehachsen der Wurfgebläse 100 von unten her zuführt.

Die Drehachse 110 des Rotors 92 des Strohhäckslers 60 erstreckt sich horizontal und quer zur Vorwärtsrichtung. Die Wurfgebläse 100 sind seitlich nebeneinander rückwärtig des Strohhäckslers 60 angeordnet. Die Wurfgebläse 100 befinden sich innerhalb der Breite des Strohhäckslers 60. Die Wurfgebläse 100 sind durch Halterungen (nicht gezeigt) am dem Rahmen 12 des Mähdreschers 10 und/oder an der Rutsche 86 befestigt. Es wäre auch möglich, den Strohhäcksler 60 und die Wurfgebläse 100 derart anzuordnen, dass der Strohhäcksler 60 die Wurfgebläse 100 von oben her beaufschlagt. Bei einer anderen Ausführungsform sind die Drehachsen 108 der Wurfgebläse 100 horizontal oder genau vertikal.

In der Schwadablageposition der Klappe 80 fördert der Strohhäcksler 60 nur die Erntegutreste aus dem Reinigungssystem 28 zu den Wurfgebläsen 100, welche sie etwa über die Breite des Schneidwerks 18 auf dem Feldboden verteilen. Im Häckselbetrieb zerkleinert der Strohhäcksler 60 auch das Stroh auf dem Auslass 62 der Erntegutbearbeitungseinrichtung 26, das durch die Auswurftrommel 64 und den Trommelförderer 68 gegen die Klappe 80 geworfen wird und dann nach unten in den Einlass 58 des Strohhäckslers 60 fällt.

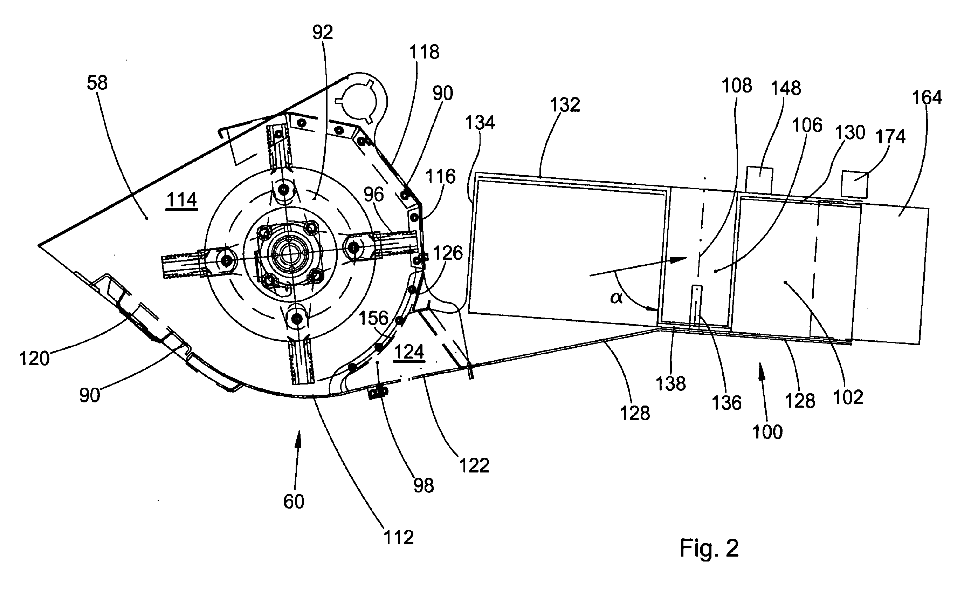

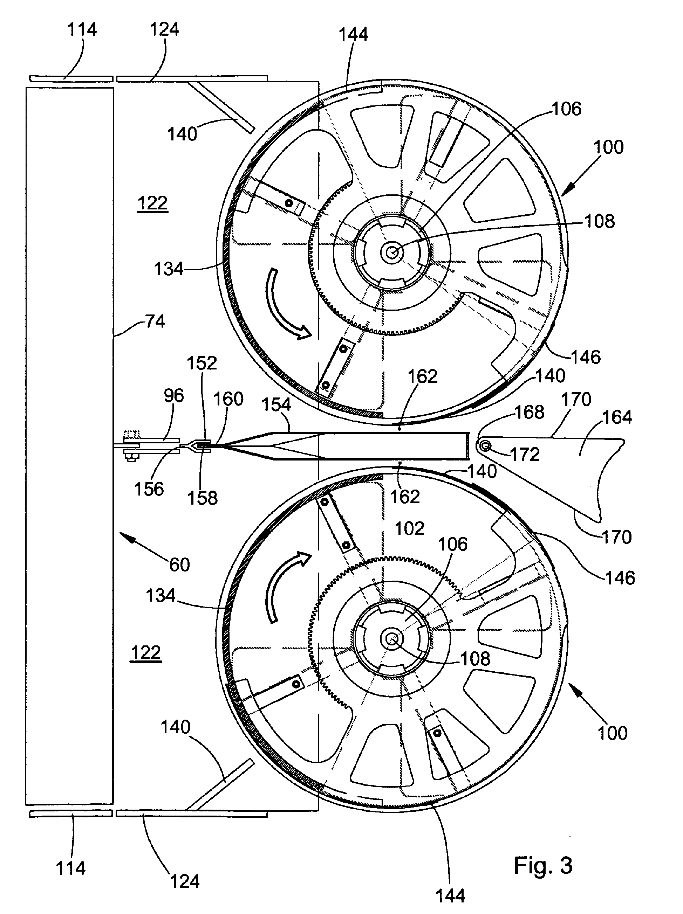

Es wird nun auf die Figuren 2 und 3 verwiesen, in welcher die Emtegutrestehäcksel- und -verteilanordnung des Mähdreschers 10 in einer Seitenansicht (Figur 2) und einer Draufsicht (Figur 3) dargestellt ist. Die Emtegutrestehäcksel- und -verteilanordnung umfasst den Strohhäcksler 60 und die Wurfgebläse 100. Das Strohhäckslergehäuse 90 umfasst einen Boden 112, zwei Seitenwände 114 und weitere Querbleche 116, 118, 120, die wie der Boden 112 die Seitenwände 114 untereinander verbinden und den Rotor 74 umschließen. Der Boden 112 ist an der Unterseite des Strohhäckslergehäuses 90 angeordnet und umschließt den von den Häckselmessern 96 definierten Hüllkreis kreisbogenförmig in einem relativ geringen Abstand mit einem Radius. Es sind Gegenmesser (nicht dargestellt) vorgesehen, die am Strohhäckslergehäuse 90 befestigt werden und in den Hüllkreis der Häckselmesser 96 eindringen, um die Erntegutreste effektiv zu zerkleinern.

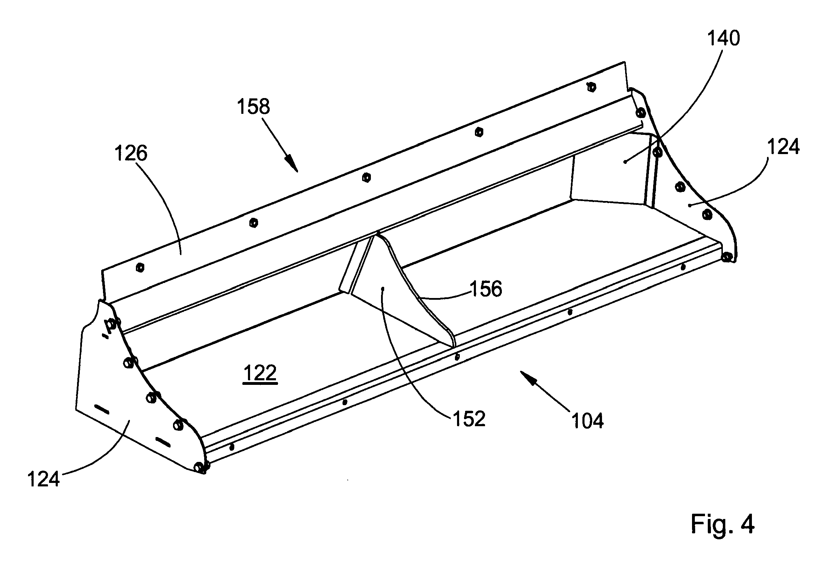

An den Boden 112 schließt sich in der Flussrichtung der Erntegutreste ein Erntegutresteführungselement 122 an, das in der Figur 4 in einer perspektivischen Ansicht dargestellt ist. Das Erntegutresteführungselement 122 ist zwischen Seitenwandverlängerungen 124 angeordnet, die mit je einer Seitenwand 114 des Strohhäckslergehäuses 90 durch Schraubverbindungen verbunden sind und sich dazu parallel erstrecken. Das Erntegutresteführungselement 122 ist in sich eben (hat demnach einen Radius von ∞). Das Erntegutresteführungselement 122 ist an seinem vorderen Ende nach unten abgewinkelt, um einen Flansch zu bilden, der mit einem ebenfalls nach unten abgewinkelten Flansch an der Rückseite des Bodens 112 verschraubt ist. Durch diese Verbindung vermeidet man überstehende Kanten, an denen sich Erntegutreste ansammeln könnten. An der Oberseite der Seitenwandverlängerungen 124 ist ein Querblech 126 angebracht, das den Auslass 98 des Strohhäckslers 60 nach oben hin begrenzt. Nach oben hin schließt sich an das Querblech 126 ein Querblech 116 des Strohhäckslergehäuses 90 an. Es sei noch angemerkt, dass das Erntegutresteführungselement 122 einteilig mit dem Boden 112 hergestellt werden könnte, wie auch die Seitenwandverlängerungen 124 einteilig mit den Seitenwänden 114 hergestellt werden könnten. Die dargestellte, zweiteilige Ausführungsform kann jedoch den Strohhäcksler 60 ohne Erntegutresteführungselement 122 und Seitenwandverlängerungen 124 (oder mit einem anderen Erntegutresteführungselement und anderen Seitenwandverlängerungen, nicht gezeigt) in Kombination mit einem Verteilerboden mit verstellbaren Leitblechen verwenden.

An den Seitenwandverlängerungen 124 (s. Figur 4) sind äußere Leitelemente 140 befestigt, die sich unter einem Winkel von etwa 45° nach innen und hinten erstrecken. Sie sind in der Draufsicht rechteckig und können über ihre ganze Länge oder nur in ihrem vorderen Bereich, der sich an einen mit der Seitenwandverlängerung 124 verbundenen, parallel zu ihr erstreckenden Bereich anschließt, gekrümmt sein. In vertikaler Richtung sind die äußeren Leitelemente 140 flach. Es wäre auch möglich, die äußeren Leitelemente 140 zusätzlich oder ausschließlich am Erntegutresteführungselement 122 zu befestigen. Auch könnten sie in der Art eines Pflugschars oder einer Kufe geformt sein.

An der Unterseite der Wurfgebläse 100 ist ein abgewinkeltes Bodenblech 128 angeordnet, das sich von einer Position kurz vor den Drehachsen bis an das rückwärtige Ende der Wurfgebläse erstreckt. Das Bodenblech 128 weist einen vorderen Abschnitt auf, der sich in der Ebene des Erntegutresteführungselements 122 erstreckt und mit einem nach unten abgewinkelten Flansch an einem nach unten abgewinkelten Flansch des Erntegutresteführungselements 122 anliegt. Diese Flansche können miteinander verschraubt werden oder nur aneinander anliegen, um die Wurfgebläse 100 leichter getrennt vom Strohhäcksler 60 in eine Transportposition verbringen zu können. Der vordere Abschnitt des Bodenblechs 128 erstreckt sich vom besagten Flansch bis kurz vor die Drehachse 108 der Wurfgebläse 100 und geht dort in einen rückwärtigen Abschnitt über, der sich bis unter das rückwärtige Ende der Wurfgebläse 100 und orthogonal zur Drehachse 108 erstreckt.

Die unten liegenden Ausgangswellen 136 der am Deckel 132 befestigten Hydromotoren 106 treiben die Wurfpaddel 102 über eine Querverbindung 138 und eine zylindrische Welle 139 an, die an ihrem oberen Ende an einem Teller 130 mit einer mittleren Öffnung befestigt ist. Die Wurfpaddel 102 der Wurfgebläse 100 erstrecken sich jeweils genau über die axiale Abmessung der Welle 139. Die Wurfpaddel 102 liegen mit ihren Oberseiten am Teller 130 an oder sind daran befestigt (z. B. angeschweißt).

Oberhalb des Tellers 130 befindet sich ein Deckel 132, der die Wurfgebläse 100 nach oben hin abdeckt, und an dessen Vorderseite zwei jeweils ein Wurfgebläse 100 halbkreisförmig nach vom radial umschließende Teilummantelungen 134 angeordnet sind. Weitere Teilummantelungen 140 schließen sich an den benachbarten Innenseiten der Wurfgebläse 100 an, wobei zwischen den Teilummantelungen 134 und den Teilummantelungen 140 noch Lücken 142 verbleiben.

Zwischen den beiden Wurfgebläsen 100 befindet sich ein zweiteiliges Leitelement 150, das einen vorderen Teil 152 und einen rückwärtigen Teil 154 umfasst. Der vordere Teil 152 ist am Erntegutresteführungselement 122 befestigt und mit seiner vorderen Spitze 156 an den Hüllkreis der Häckselmesser 96 angepasst, so dass er über seine dem Hüllkreis der Häckselmesser 96 benachbarte Spitze 156 kreisbogenförmig ausgeformt ist und diese Spitze 165 in einem relativ geringen Abstand vom Hüllkreis der Häckselmesser 96 angeordnet ist. Dadurch erreicht man, dass sich dort ansammelnde Emtegutreste, insbesondere bei feuchten Erntegutbedingungen, durch die Häckselmesser 96 entfernt werden, so dass sich keine unerwünschten, möglicherweise zu Verstopfungen führenden Ansammlungen von Erntegut an der Spitze 156 zu befürchten sind. An seiner Rückseite bildet der vordere Teil 152 einen Schlitz 158, in der ein flaches, vorderes Blech 158 des rückwärtigen Teils 154 eindringt. Rückwärtig des vorderen Blechs 158 verbreitert sich der rückwärtige Teil 154 und ist in sich hohl. Der rückwärtige Teil 154 ist an der Unterseite des Deckels 132 und an der Oberseite des Bodenblechs 128 befestigt, welche mit den Teilummantelungen 134, 140 und den Abschirmungen 144, 146 ein Wurfgebläsegehäuse bilden.

Anhand der Figur 3 ist erkennbar, dass zwischen dem Leitelement 150 und den ihm benachbarten Teilummantelungen 134, 140 der Wurfgebläse 80 jeweils Durchlässe 162 vorhanden sind, durch die ein im mittleren Bereich des Strohhäckslers 60 abgegebener Teil des Emtegutrestestroms vom Strohhäcksler 60 nach hinten hindurch bis auf das Feld strömen kann.

Rückwärtig des rückwärtigen Teils 154 des Leitelements 150 ist ein bewegliches Führungselement 164 vorgesehen mit einer vorderen Spitze 168, die sich rückwärtig der Drehachsen 108 der Wurfgebläse 100 in deren Zwickelbereich befindet, und zwei divergierenden, seitlichen, geraden Wänden 170, die jeweils einem Wurfgebläse 100 benachbart angeordnet sind. Das bewegliche Führungselement 164 ist um eine vorn liegende Achse 172, die sich parallel zur Drehachse 108 der Wurfgebläse 100 erstreckt, durch einen oberhalb des Deckels 132 rückwärtig der Hydraulikmotoren 106 angebrachten Antrieb 174 in eine Schwingbewegung versetzbar. Hierzu wird auf die DE 10 2007 037 485 B3 und die DE 10 2008 055 003 A1 verwiesen, deren Offenbarung durch Verweis mit in die vorliegenden Unterlagen aufgenommen wird.

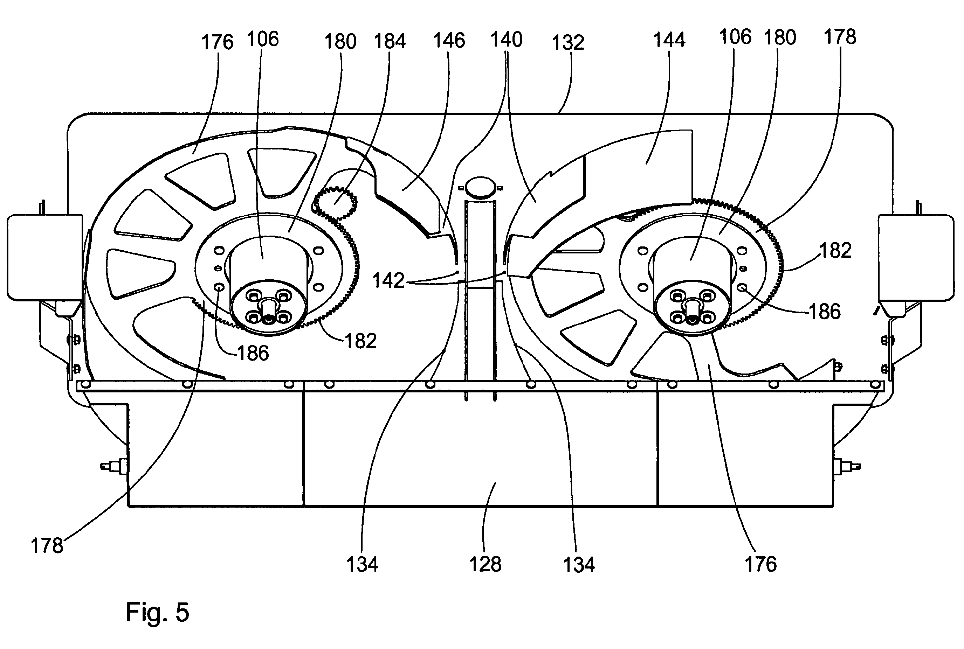

Die Teilummantelungen 140 sind, wie in den Figuren 5 bis 7 erkennbar, mit einem höheren, rückwärtigen Abschnitt und einem niedrigeren, vorderen Abschnitt ausgestattet, zwischen denen ein schräg ansteigender Bereich vorgesehen ist.

Die Teilummantelungen 140 können an ihren rückwärtigen Enden wahlweise um kürzere oder längere Winkelbereiche verlängert werden, indem erste und zweite Abschirmungen 144, 146 mit unterschiedlichen Abmessungen in Umfangsrichtung mittels eines manuell durch den Bediener aus der Kabine 16 oder selbsttätig abhängig von der Stellung der Klappe 68 kontrollierten Verstellantriebs 148 an den rückwärtigen Enden der Teilummantelungen 140 positioniert werden, um die Erntegutreste mehr oder weniger weit nach außen abzulenken, indem sie die Wurfgebläse 100 abdecken und die freie Abgabe der Erntegutreste radial nach außen verhindern, so dass die Erntegutreste die Wurfgebläse 100 erst verlassen können, nachdem sie an den Abschirmungen 144 oder 146 vorbei gelangt sind. Dadurch kann im Schwadablagebetrieb durch Verbringen der ersten, längeren Abschirmung 144 an das rückwärtige, innere Ende der Teilummantelung 140 erreicht werden, dass das Kaff seitlich neben dem Schwad abgelegt wird, oder im Strohhäckselbetrieb werden die Erntegutreste gleichmäßig über das Feld verteilt, indem die zweiten, kürzere Abschirmung 146 an das rückwärtige, innere Ende der Teilummantelung 140 verbracht wird. Außerdem können die Abschirmungen 144, 146 beider Wurfgebläse 80 unabhängig voneinander verstellt werden, um Seitenwind- und/oder -hangeinflüsse auszugleichen.

Die Abschirmungen 144, 146 sind jeweils gemeinsam und sich diametral gegenüberliegend an etwa halbkreisförmigen Drehhaltern 176 befestigt, die zwischen dem Deckel 132 und den Tellern 130 positioniert sind. Die Drehhalter 176 umfassen einen mittleren Bereich 178 mit einer zentrischen Öffnung, durch die sich die zugehörige Drehachse 108 des zugehörigen Wurfgebläses 100 erstreckt. Der mittlere Bereich 178 ist in axialer Richtung zwischen dem Deckel 132 und einer mit dem Deckel 132 verbundenen Halterungsscheibe 180 gelagert, insbesondere gleitgelagert. Die zentrische Öffnung des mittleren Bereichs 178 liegt in radialer Richtung an mit dem Deckel 132 und/oder der Halterungsscheibe 180 verbundenen Halterungselementen 186 in Form von Schrauben an und ist somit in radialer Richtung fixiert. Der mittlere Bereich 178 ist außen mit einer Verzahnung 182 versehen, die sich über einen Teil seines Umfangs erstreckt, und mit der ein mit dem Antrieb 148 gekoppeltes Zahnrad 184 kämmt.

Die ersten, längeren Abschirmungen 144 sind etwa rechteckig geformt mit einer abgewinkelten vorderen, unteren Ecke. Sie sind radial innenseitig der Teilummantelungen 140 positionierbar. Dadurch vermeidet man unerwünschte Kanten, an denen sich die relativ kleinen Erntegutreste verklemmen können, wenn sich die ersten Abschirmungen 144 in ihrer aktiven Position an der Innenseite der Teilummantelungen befinden, da dann die hierfür besonders kritische Spreu gefördert wird. Die ersten Abschirmungen 144 sind in radialer Richtung der Achsen 108 der Wurfgebläse 100 wesentlich länger als die Teilummantelungen 140.

Die zweiten, kürzeren Abschirmungen 146 sind ebenfalls etwa rechteckig geformt mit einer ausgesparten hinteren, unteren Ecke. Sie sind radial außenseitig der Teilummantelungen 140 positionierbar. Die Abmessungen der zweiten Abschirmungen 146 in radialer Richtung der Achsen 108 der Wurfgebläse 100 entspricht etwa den Abmessungen der Teilummantelungen 140 in radialer Richtung der Achsen 108 der Wurfgebläse 100.

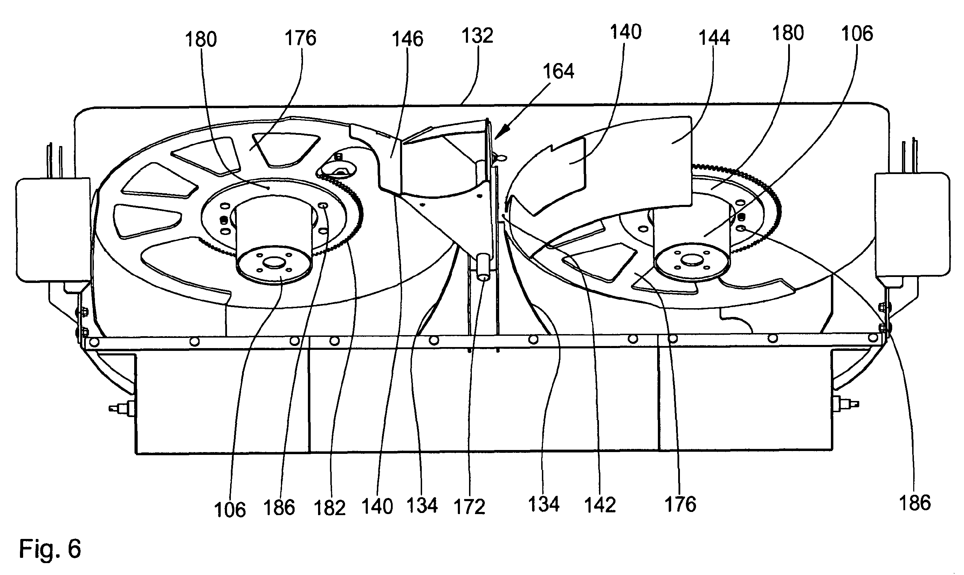

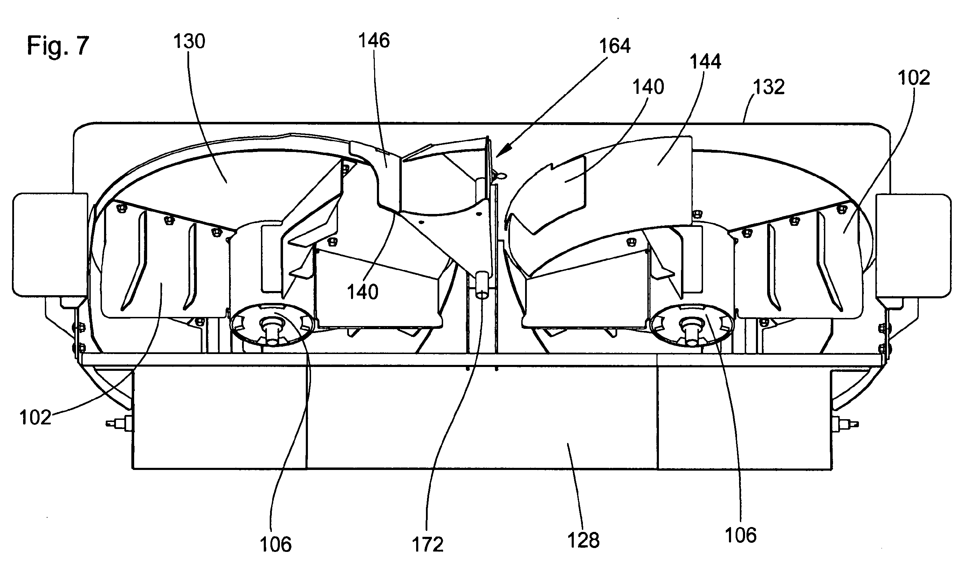

In der Figur 5 ist beim links eingezeichneten Wurfgebläse 100 die zweite Abschirmung 146 in der aktiven Stellung, in der sie sich nach hinten an die Teilummantelung 140 anschließt. Beim rechts eingezeichneten Wurfgebläse 100 ist die erste Abschirmung 144 in der aktiven Stellung, in der sie sich nach hinten an die Teilummantelung 140 anschließt. In der Figur 6, in welcher auch das Führungselement 164 mit eingezeichnet wurde, ist die Stellung der Abschirmung 144 des rechten Wurfgebläses 100 gegenüber der Figur 5 nicht verändert, während die Stellung der Abschirmung 146 des linken Wurfgebläses 100 gegenüber der Figur 5 im Uhrzeigersinn verstellt wurde, was dazu führt, dass die Erntegutreste vermehrt in der Nähe der Längsmittelebene des Mähdreschers 10 auf dem Feld abgegeben werden. Auf diese Weise können durch den Bediener oder selbsttätig Seitenwind- und Hangeinflüsse ausgeglichen werden, um die Erntegutreste möglichst gleichmäßig auf dem Feld zu verteilen. In der Figur 7 wurde die Stellung der Abschirmungen 144, 146 gegenüber der Figur 6 nicht verändert, aber die Teller 130 und die Wurfpaddel 102 mit eingezeichnet. Anders als in den Figuren 5 bis 7 dargestellt, könnten die ersten Abschirmungen 144 auch in eine Stellung verbracht werden, in der sie unmittelbar an die Teilummantelungen 134 anschließen, um die Lücken 142 zu schließen und zu erreichen, dass die Erntegutreste nur nach außen abgegeben werden.

Nach alledem ergibt sich folgende Funktion der Emtegutrestehäcksel- und -verteilanordnung im Erntebetrieb. Die aus Kaff und bei in der Figur 1 eingezeichneter Stellung stehender Klappe 80 aus Stroh bestehenden Erntegutreste gelangen durch den Einlass 58 in den Strohhäcksler 60 und werden dort, ggf. im Zusammenwirken mit (nicht eingezeichneten Gegenmessern) durch die Häckselmesser 96 zerkleinert und durch den Auslass 98 ausgeworfen. Die Erntegutreste strömen oberhalb des Erntegutresteführungselements 122 entlang und treffen unter einem Winkel α von etwa 55° gegenüber der Drehachse 108 der Wurfgebläse 100 auf deren Wurfpaddel 102. Die äußeren Leitelemente 140 leiten die äußeren Teile des Erntegutrestestroms nach innen ab, so dass die ganz außen liegenden Teile der Wurfgebläse 100 nicht mit Erntegutresten beaufschlagt werden und diese auch nicht um fast 180° nach vorn umgelenkt werden müssen. Der relativ große Winkel α und der Auftreffort der Erntegutreste vor der Drehachse 108 der Wurfgebläse 100 vermindert deren Energiebedarf weiter. Auf diese Weise wird die vom Strohhäcksler 60 bereits bereitgestellte Geschwindigkeit der Erntegutreste bestmöglich genutzt, da keine größere Umlenkung stromab des Strohhäckslers 60 mehr vorgesehen ist und die Wurfgebläse 100 die Erntegutreste im Wesentlichen in deren bereits vorhandener Richtung weiterfördern.

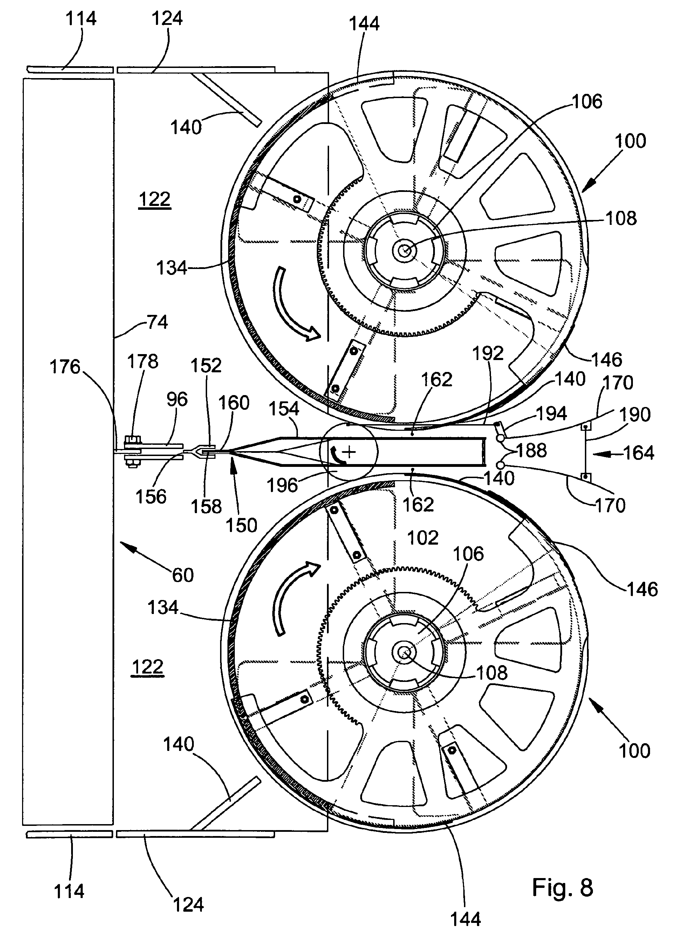

Schließlich wird auf die Figur 8 verwiesen, die eine grundsätzlich der Ausführungsform nach den Figuren 2 bis 5 entsprechende Ausführungsform darstellt. Im Unterschied dazu ist das bewegliche Führungselement 164 aus zwei Wänden 170 aufgebaut, die getrennt voneinander unmittelbar rückwärtig des rückwärtigen Teils 154 des Leitelements 150 um Schwenkachsen 188 schwenkbar gelagert sind. Die Schwenkachsen 188 erstrecken sich parallel zu den Drehachsen der Wurfgebläse 100. Die Wände 170 sind jeweils konkav gekrümmt mit einem Durchmesser, der etwa dem Durchmesser der Wurfgebläse 100 bzw. dem Durchmesser der Leitelemente 140 entspricht. Die Wände 170 sind untereinander durch eine Koppelstange 190 verbunden, die an beiden Wänden 170 angelenkt ist. Eine Kurbelstange 192 verbindet einen mit einer der Wände 170 verbundenen Zapfen 194, der mit der Wand 170 um die Schwenkachse 188 rotiert, mit einem durch den Antrieb 174 in Drehung versetzbaren Antriebsrad 196. Die Kurbelstange 192 ist exzentrisch gegenüber dem Drehpunkt des Antriebsrades 196 angelenkt. Die Funktion des Führungselements 164 in Figur 11 entspricht jener des Führungselements 164 der Figur 3.

## Patentansprüche

1. Emtegutrestehäcksel- und -verteilanordnung mit einem mit pendelnd aufgehängten Häckselmessern (96) ausgestatteten Strohhäcksler (60), der in einem Strohhäckslergehäuse (90) angeordnet ist, an dem Gegenmesser befestigt sind, die in den Hüllkreis der Häckselmesser (96) eindringen, und zwei stromab des Strohhäckslers (60) seitlich nebeneinander angeordneten Wurfgebläsen (100), die im Betrieb gegensinnig und mit ihren dem Strohhäcksler (60) zugewandten Bereichen aufeinander zu bewegend rotieren und zwischen denen ein Leitelement (150) angeordnet ist, das eine dem Strohhäcksler (60) zugewandte Spitze (156) umfasst, die sich vor der Drehachse (108) der Wurfgebläse (100) befindet, **dadurch gekennzeichnet, dass** in seitlicher Richtung zwischen dem Leitelement (150) und dem Leitelement (150) benachbarten, die Wurfgebläse (100) teilweise umrandenden Teilummantelungen (134, 140) jeweils freie Durchlässe (162) verbleiben, durch die ein im mittleren Bereich des Strohhäckslers (60) abgegebener Erntegutrestestrom vom Strohhäcksler (60) nach hinten hindurch bis auf das Feld strömen kann.

2. Emtegutrestehäcksel- und -verteilanordnung nach Anspruch 1, **dadurch gekennzeichnet, dass** sich das Leitelement (150) bis hinter die Drehachsen (108) der Wurfgebläse (100) erstreckt.

3. Emtegutrestehäcksel- und -verteilanordnung nach Anspruch 2, **dadurch gekennzeichnet, dass** sich an das rückwärtige Ende des Leitelements (150) ein bewegliches Führungselement (164) anschließt, das im Betrieb kontinuierlich um eine sich parallel zur Drehachse (108) der Wurfgebläse (100) erstreckende Achse (172) bewegbar ist.

4. Emtegutrestehäcksel- und -verteilanordnung nach einem der Ansprüche 1 bis 3,
**dadurch gekennzeichnet, dass** sich das Leitelement (150) aus einem vorderen Teil (152) und einem rückwärtigen Teil (154) zusammensetzt, wobei der die Spitze (156) umfassende, vordere Teil (152) an einem Erntegutresteführungselement (122) befestigt ist, welches Teil eines den Strohhäckslers (60) aufnehmenden Strohhäckslergehäuses (90) oder damit verbunden ist, und der rückwärtige Teil (156) an einem die Wurfgebläse (100) aufnehmenden Wurfgebläsegehäuse befestigt ist.

5. Emtegutrestehäcksel- und -verteilanordnung nach Anspruch 4, **dadurch gekennzeichnet, dass** an der Rückseite des vorderen Teils (152) ein Schlitz (158) ausgebildet ist, in den sich der rückwärtige Teil (154) hinein erstreckt.

6. Emtegutrestehäcksel- und -verteilanordnung nach einem der Ansprüche 1 bis 5, **dadurch gekennzeichnet, dass** zwischen den Teilummantelungen (134, 140) dem Leitelement (150) benachbarte Lücken (142) vorgesehen sind.

7. Emtegutrestehäcksel- und -verteilanordnung nach einem der Ansprüche 1 bis 6, **dadurch gekennzeichnet, dass** die Drehachsen (108) der Wurfgebläse (100) innerhalb der Breite des Strohhäckslers (60) angeordnet sind und dass zwischen dem Strohhäcksler (60) und den Wurfgebläsen (100) äußere Leitelemente (140) vorgesehen sind, welche die äußeren Bereiche des Erntegutresteflusses nach innen ablenken.

8. Emtegutrestehäcksel- und -verteilanordnung nach Anspruch 7, **dadurch gekennzeichnet, dass** die Wurfgebläse (100) innerhalb der Breite des Strohhäckslers (60) angeordnet sind.

9. Emtegutrestehäcksel- und -verteilanordnung nach Anspruch 7 oder 8, **dadurch gekennzeichnet, dass** die äußeren Leitelemente (140) an eine seitliche Wand eines Strohhäckslergehäuses (90) oder eine damit verbundene Seitenwandverlängerung (124) anschließen.

10. Emtegutrestehäcksel- und -verteilanordnung nach einem der Ansprüche 1 bis 9, **dadurch gekennzeichnet, dass** der Strohhäcksler (60) derart angeordnet ist, dass er das Wurfgebläse (100) im Betrieb in axialer Richtung unter einem Winkel (α) beaufschlagt.

11. Emtegutrestehäcksel- und -verteilanordnung nach einem der Ansprüche 1 bis 10, **dadurch gekennzeichnet, dass** der Strohhäcksler (60) innerhalb eines Strohhäckslergehäuses (90) mit einem konkaven Boden (112) angeordnet ist, dass das Strohhäckslergehäuse (90) und ein zwischen dem Boden (112) des Strohhäckslergehäuses (90) und den Wurfgebläsen (100) angeordnetes Erntegutresteführungselement (122) derart angeordnet sind, dass das Wurfgebläse (100) im Betrieb in axialer Richtung unter einem Winkel (α) beaufschlagt wird, und dass das Erntegutresteführungselement (122) in sich flach ist.

12. Emtegutrestehäcksel- und -verteilanordnung nach einem der Ansprüche 1 bis 11,
**dadurch gekennzeichnet, dass** der Erntegutrestestrom in Vorwärtsrichtung vor den Drehachsen (108) der Wurfgebläse (100) einläuft.

13. Mähdrescher (10) mit einer Emtegutrestehäcksel- und -verteilanordnung nach einem der Ansprüche 1 bis 12.

## Claims

1. Crop residue chopping and distributing arrangement having a straw chopper (60) equipped with chopping blades (96) that are suspended in an oscillating manner, said straw chopper being arranged in a straw chopper housing (90) to which there are fastened counterpart blades which penetrate into the envelope circle of the chopping blades (96), and having two ejector blowers (100) which are arranged laterally alongside one another downstream of the straw chopper (60), rotate in opposite directions and with their regions which face the straw chopper (60) moving towards one another during operation and between which there is arranged a directing element (150) which comprises a tip (156) that faces towards the straw chopper (60) and is located upstream of the rotational axis (108) of the ejector blowers (100), **characterized in that** in each case free passages (162) remain in the lateral direction between the directing element (150) and partial casings (134, 140) that are adjacent to the directing element (150) and partially border the ejector blowers (100), it being possible for a crop residue stream discharged in the central region of the straw chopper (60) to flow to the rear from the straw chopper (60) through these free passages (162) and onto the field.

2. Crop residue chopping and distributing arrangement according to Claim 1, **characterized in that** the directing element (150) extends as far as behind the rotational axes (108) of the ejector blowers (100).

3. Crop residue chopping and distributing arrangement according to Claim 2, **characterized in that** the rear end of the directing element (150) is adjoined by a movable guide element (164) which is movable continuously during operation about an axle (172) that extends parallel to the rotational axis (108) of the ejector blowers (100).

4. Crop residue chopping and distributing arrangement according to one of Claims 1 to 3, **characterized in that** the directing element (150) is composed of a front part (152) and a rear part (154), wherein the front part (152), which comprises the tip (156), is fastened to a crop residue guide element (122) which is part of or is connected to a straw chopper housing (90) that accommodates the straw chopper (60), and the rear part (156) is fastened to an ejector blower housing that accommodates the ejector blowers (100).

5. Crop residue chopping and distributing arrangement according to Claim 4, **characterized in that** on the rear side of the front part (152) there is formed a slot (158), into which the rear part (154) extends.

6. Crop residue chopping and distributing arrangement according to one of Claims 1 to 5, **characterized in that** gaps (142) adjacent to the directing element (150) are provided between the partial casings (134, 140).

7. Crop residue chopping and distributing arrangement according to one of Claims 1 to 6, **characterized in that** the rotational axes (108) of the ejector blowers (100) are arranged within the width of the straw chopper (60), and **in that** between the straw chopper (60) and the ejector blowers (100) there are provided external directing elements (140) which deflect the external regions of the crop residue flow inwards.

8. Crop residue chopping and distributing arrangement according to Claim 7, **characterized in that** the ejector blowers (100) are arranged within the width of the straw chopper (60).

9. Crop residue chopping and distributing arrangement according to Claim 7 or 8, **characterized in that** the external directing elements (140) adjoin a side wall of a straw chopper housing (90) or a side-wall extension (124) connected thereto.

10. Crop residue chopping and distributing arrangement according to one of Claims 1 to 9, **characterized in that** the straw chopper (60) is arranged such that it impinges on the ejector blower (100) at an angle (α) in the axial direction during operation.

11. Crop residue chopping and distributing arrangement according to one of Claims 1 to 10, **characterized in that** the straw chopper (60) is arranged within a straw chopper housing (90) having a concave base (112), **in that** the straw chopper housing (90) and a crop residue guide element (122) arranged between the base (112) of the straw chopper housing (90) and the ejector blowers (100) are arranged such that the ejector blower (100) is impinged upon at an angle (α) in the axial direction during operation, and **in that** the crop residue guide element (122) is inherently flat.

12. Crop residue chopping and distributing arrangement according to one of Claims 1 to 11, **characterized in that** the crop residue stream runs in upstream of the rotational axes (108) of the ejector blowers (100) in the forward direction.

13. Combine harvester (10) having a crop residue chopping and distributing arrangement according to one of Claims 1 to 12.

## Revendications

1. Agencement de hachage et de répartition de résidus de produits de récolte comprenant un hache-paille (60) équipé de couteaux de hachage (96) suspendus de manière pendulaire, le hache-paille (60) étant disposé dans un boîtier de hache-paille (90) sur lequel sont fixés des couteaux conjugués, qui pénètrent dans le cercle d'enveloppe des couteaux de hachage (96), et deux soufflantes de dispersion (100) disposées latéralement l'une à côté de l'autre en aval du hache-paille (60), qui tournent en sens inverse pendant le fonctionnement en se déplaçant l'une vers l'autre avec leurs régions tournées vers le hache-paille (60) et entre lesquelles est disposé un élément conducteur (150) comprenant une pointe (156) tournée vers le hache-paille (60), qui se situe devant l'axe de rotation (108) des soufflantes de dispersion (100), **caractérisé en ce que**, dans la direction latérale, entre l'élément conducteur (150) et des enveloppes partielles (134, 140) entourant partiellement les soufflantes de dispersion (100), adjacentes à l'élément conducteur (150), subsistent à chaque fois des libres passages (162), à travers lesquels un flux de résidus de produits de récolte délivré dans la région centrale du hache-paille (60) peut s'écouler depuis le hache-paille (60) vers l'arrière jusque dans le champ.

2. Agencement de hachage et de répartition de résidus de produits de récolte selon la revendication 1, **caractérisé en ce que** l'élément conducteur (150) s'étend jusque derrière les axes de rotation (108) des soufflantes de dispersion (100).

3. Agencement de hachage et de répartition de résidus de produits de récolte selon la revendication 2, **caractérisé en ce qu'**un élément de guidage mobile (164) se raccorde à l'extrémité arrière de l'élément conducteur (150), lequel peut être déplacé pendant le fonctionnement en continu autour d'un axe (172) s'étendant parallèlement à l'axe de rotation (108) des soufflantes de dispersion (100).

4. Agencement de hachage et de répartition de résidus de produits de récolte selon l'une quelconque des revendications 1 à 3, **caractérisé en ce que** l'élément conducteur (150) se compose d'une partie avant (152) et d'une partie arrière (154), la partie avant (152) comprenant la pointe (156), étant fixée sur un élément de guidage des résidus de récolte (122), lequel fait partie, ou est connecté à, un boîtier de hache-paille (90) recevant le hache-paille (60), et la partie arrière (156) étant fixée à un boîtier de soufflante de dispersion recevant les soufflantes de dispersion (100).

5. Agencement de hachage et de répartition de résidus de produits de récolte selon la revendication 4, **caractérisé en ce qu'**une fente (158) est réalisée sur le côté arrière de la partie avant (152), dans laquelle fente s'étend la partie arrière (154).

6. Agencement de hachage et de répartition de résidus de produits de récolte selon l'une quelconque des revendications 1 à 5, **caractérisé en ce que** des espaces vides (142) adjacents à l'élément conducteur (150) sont prévus entre les enveloppes partielles (134, 140).

7. Agencement de hachage et de répartition de résidus de produits de récolte selon l'une quelconque des revendications 1 à 6, **caractérisé en ce que** les axes de rotation (108) des soufflantes de dispersion (100) sont disposés à l'intérieur de la largeur du hache-paille (60), et **en ce qu'**entre le hache-paille (60) et les soufflantes de dispersion (100) sont prévus des éléments conducteurs extérieurs (140), qui dévient vers l'intérieur des régions extérieures du flux de résidus de récolte.

8. Agencement de hachage et de répartition de résidus de produits de récolte selon la revendication 7, **caractérisé en ce que** les soufflantes de dispersion (100) sont disposées à l'intérieur de la largeur du hache-paille (60).

9. Agencement de hachage et de répartition de résidus de produits de récolte selon la revendication 7 ou 8, **caractérisé en ce que** les éléments conducteurs extérieurs (140) se raccordent à une paroi latérale d'un boîtier de hache-paille (90) ou à un prolongement de paroi latérale (124) qui lui est connecté.

10. Agencement de hachage et de répartition de résidus de produits de récolte selon l'une quelconque des revendications 1 à 9, **caractérisé en ce que** le hache-paille (60) est disposé de telle sorte qu'il sollicite la soufflante de dispersion (100) pendant le fonctionnement dans la direction axiale suivant un angle (α).

11. Agencement de hachage et de répartition de résidus de produits de récolte selon l'une quelconque des revendications 1 à 10, **caractérisé en ce que** le hache-paille (60) est disposé à l'intérieur d'un boîtier de hache-paille (90) ayant un fond concave (112), **en ce que** le boîtier de hache-paille (90) et un élément de guidage des résidus de récolte (122) disposé entre le fond (112) du boîtier de hache-paille (90) et les soufflantes de dispersion (100) sont disposés de telle sorte que la soufflante de dispersion (100) soit sollicitée pendant le fonctionnement dans la direction axiale suivant un angle (α) et **en ce que** l'élément de guidage des résidus de récolte (122) est, en soi, plat.

12. Agencement de hachage et de répartition de résidus de produits de récolte selon l'une quelconque des revendications 1 à 11, **caractérisé en ce que** le flux de résidus de récolte afflue dans la direction d'avance devant les axes de rotation (108) des soufflantes de dispersion (100).

13. Moissonneuse-batteuse (10) comprenant un agencement de hachage et de répartition de résidus de produits de récolte selon l'une quelconque des revendications 1 à 12.
